Europäisches Patentamt

European Patent Office

Office européen des brevets

(11) Numéro de publication: **0 064 488**

**A1**

## (12) DEMANDE DE BREVET EUROPEEN

(21) Numéro de dépôt: 82870022.9

(22) Date de dépôt: 28.04.82

(51) Int. Cl.³: **A 01 D 33/06**

(30) Priorité: 30.04.81 BE 204658

(43) Date de publication de la demande:
10.11.82 Bulletin 82/45

(84) Etats contractants désignés:
BE DE FR GB IT NL SE

(71) Demandeur: Dutrieux, Jean
Place, 58c
B-7564 Molembaix Hainaut(BE)

(71) Demandeur: COCKERILL SAMBRE Société Anonyme dite:
Avenue Adolphe Greiner, 1
B-4100 Liege (Seraing)(BE)

(72) Inventeur: Dutrieux, Jean
Place, 58c
B-7564 Molembaix (Province du Hainaut)(BE)

(74) Mandataire: Overath, Philippe et al,
Cabinet Bede 13, Avenue Antoine Depage
B-1050 Bruxelles(BE)

(54) Dispositif d'évacuation de feuilles ou tiges de végétaux pour machine agricole munie d'un organe de coupe.

(57) Le dispositif comprend une goulotte (14) et une vis transporteuse (15) entraînée par un axe (16). Sur un embout (18) de cet axe est fixée une roue à pales (19) aménagée dans une chambre d'évacuation (17) disposée coaxialement par rapport à la vis (15) et ayant un diamètre sensiblement supérieur à celui de la goulotte (14), l'axe (16) étant supporté par au moins deux paliers (20, 22).

La sortie tangentielle (26) de cette chambre (17) est orientable axialement par rapport à la goulotte (14).

L'invention s'applique en particulier aux effeuilleuses de betteraves.

FIG 2

EP 0 064 488 A1

La présente invention se rapporte à un dispositif d'évacuation de feuilles ou tiges de végétaux pour machine agricole munie d'un organe de coupe et plus particulièrement pour une effeuilleuse de betteraves, les feuilles ou tiges pouvant être éparpillées sur le champ ou chargées sur un chariot voisin.

Dans les machines existantes, telles que les effeuilleuses, les feuilles coupées par les fléaux sont projetées vers l'arrière et recueillies dans une goulotte où elles sont entraînées par une vis transporteuse vers le côté de la machine. L'axe de cette vis transporteuse est généralement entraîné et supporté de l'autre côté de la machine et repose par son propre poids dans la goulotte d'évacuation. Cette disposition a comme inconvénient de provoquer une usure importante par le frottement de la vis dans la goulotte et ceci surtout à l'extrémité de sortie. Afin de limiter cette usure, la vitesse de rotation de la vis est réduite au minimum, par conséquent, les charges à déplacer sont très importantes et les éléments d'entraînement et de transmission sont lourds et encombrants. De plus, les feuilles coupées tombent en tas à côté de la machine et nécessitent un second passage ou un dispositif de transport et de chargement supplémentaire (DE-A- 2 153 555).

On a aussi déjà construit, des vis transporteuses supportées par deux paliers, mais pour éviter les bourrages à la sortie, on a dû monter le palier, du côté sortie, en porte-à-faux sur la machine ce qui avait pour conséquence néfaste de déséquilibrer la machine. Cette solution a été abandonnée pour cette raison (FR-A-2 210 087).

Le but de la présente invention est de remédier aux inconvénients cités et de prévoir un dispositif d'évacuation de construction simple et plus légère pourvu de moyens pour éparpiller ou charger les feuilles ou tiges de végétaux à évacuer tout en éliminant les risques de bourrages.

En vue de la réalisation de ce but, le dispositif objet de  l'invention est caractérisé en ce que sur un embout de l'axe de la vis transporteuse est fixée une roue à pales aménagée dans une chambre d'évacuation disposée coaxialement par rapport à la vis transporteuse et ayant un diamètre sensiblement supérieur à celui de la goulotte, l'axe étant supporté par au moins deux paliers : un palier étant situé du côté de l'organe d'entraînement de la vis, l'autre palier étant situé sur la tôle de fermeture latérale de la chambre d'évacuation.

Une autre caractéristique importante est que la chambre d'évacuation possède une sortie qui s'étend sur une section de la périphérie de la chambre permettant l'éjection des feuilles ou tiges coupées selon une trajectoire tangentielle et que cette sortie est orientable axialement par rapport à la goulotte et est prolongée si nécessaire par une tuyère permettant soit le chargement des feuilles ou tiges sur un chariot voisin avec la tuyère en position verticale, soit l'éparpillement sur le sol avec la tuyère en position horizontale.

Afin de bien faire comprendre l'invention on en décrira ci-après un exemple de réalisation en se référant aux dessins annexés sur lesquels :

la figure 1 est une vue en coupe transversale du dispositif d'évacuation d'une effeuilleuse ou faucheuse selon l'invention ;

la figure 2 est une vue en coupe selon la ligne II-II dans la figure 1 ;

les figures 3A et 3B sont des schémas montrant deux possibilités d'évacuation des feuilles.

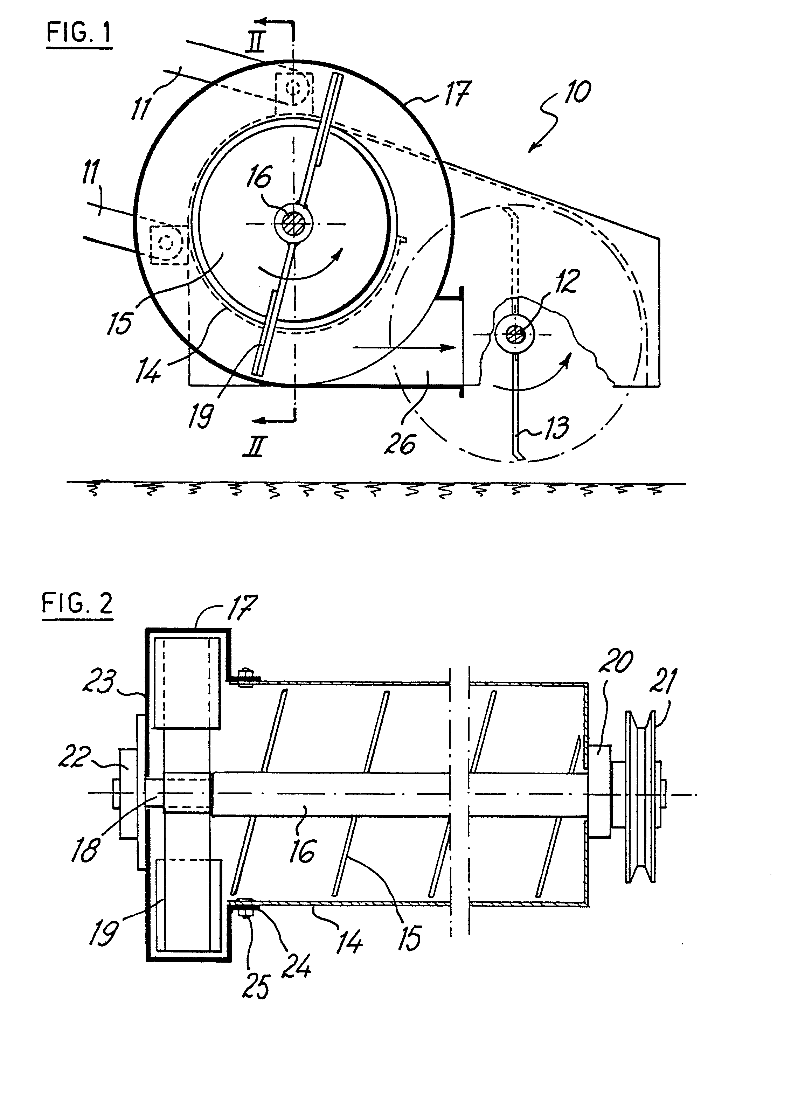

Sur la figure 1, on a représenté une effeuilleuse 10 généralement suspendue par des bras 11 à l'avant d'un tracteur (non représenté). Vers l'avant de l'effeuilleuse 10 est situé un axe transversal 12 qui porte des fléaux ou couteaux 13, destinés à couper par exemple des feuilles de betteraves lorsque l'axe 12 tourne à grande vitesse. Les feuilles ainsi coupées sont projetées vers l'arrière de l'effeuilleuse où se trouve un chenal ou goulotte 14 dans lequel tourne une vis sans fin ou vis transporteuse 15 mise en rotation par un axe 16.

Conformément à l'invention, la goulotte 14 dans laquelle se meut la vis transporteuse 15 est prolongée du côté de la sortie par une chambre d'évacuation 17 de forme cylindrique et disposée coaxialement par rapport à l'axe de la vis transporteuse 15.

Afin de faciliter l'évacuation des feuilles et d'éliminer tout risque de bourrage, la chambre d'évacuation 17 a un diamètre sensiblement supérieur à celui de la goulotte 14. L'axe 16 de la vis transporteuse 15 est prolongé au travers de cette chambre d'évacuation 17 par un embout 18 sur lequel est fixée une roue à pales 19.

Avantageusement l'axe 16 est supporté de part et d'autre par deux paliers munis de roulements à billes. Un palier 20 est situé du côté de l'organe d'entraînement 21, tandis que l'autre palier 22 est situé sur la tôle de fermeture latérale 23 de la chambre d'évacuation 17.

La chambre d'évacuation 17 est centrée et fixée sur la goulotte 14 à l'aide d'un collier 24 et de boulons 25 (figure 2) et possède une sortie 26 qui s'étend sur une section de la périphérie de la chambre 17 permettant l'éjection des feuilles ou tiges coupées selon une trajectoire tangentielle.

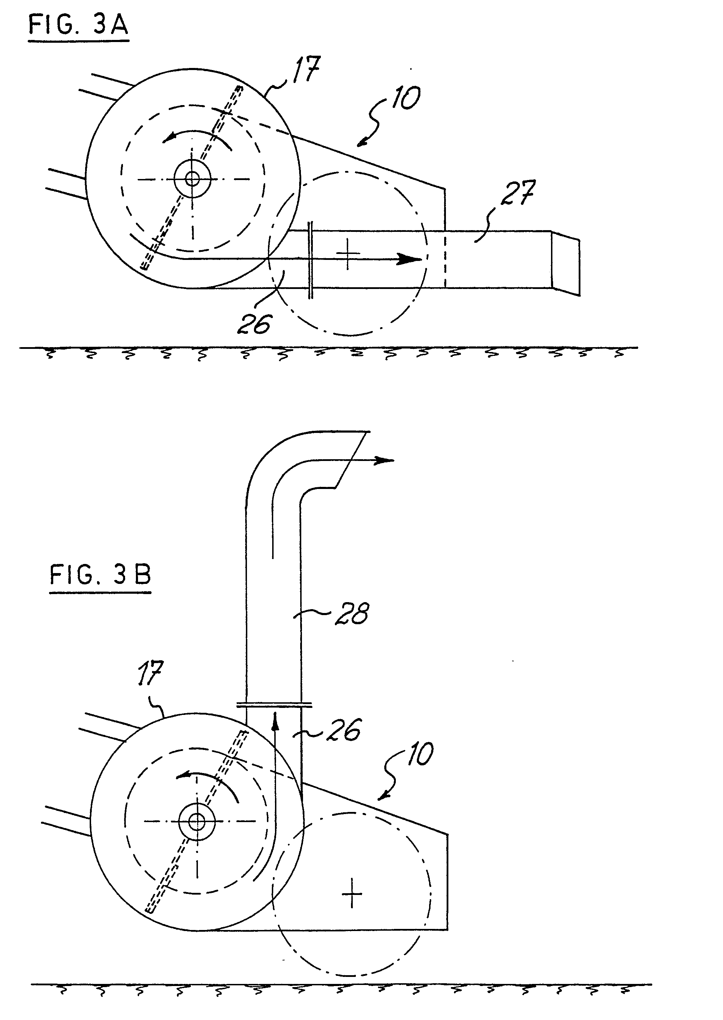

Cette sortie 26 est orientable axialement par simple rotation de la chambre 17, et peut éventuellement être prolongé par une tuyère 27 ou 28 permettant soit le chargement des feuilles ou tiges sur un chariot voisin avec la tuyère 28 en position verticale (Fig.3B) soit l'éparpillement sur le sol avec la tuyère 27 en position horizontale (Fig.3A).

Grâce au fait que l'axe 16 est supporté par deux paliers 20 et 22, la vis transporteuse ne repose plus dans le fond de la goulotte 14 et peut donc tourner à des vitesses plus élevées. Ceci a pour conséquence directe que la vis transporteuse 15 est beaucoup moins chargée de feuilles coupées. Les organes d'entraînement de la vis peuvent être moins puissants et de constructions plus légère (exemple : avec poulie et courroie au lieu de roues à chaîne de transmission).

Un avantage de l'invention est que l'axe 16 est supporté par deux paliers sans augmentation importante de l'encombrement extérieur de la machine agricole.

Un autre avantage est que la roue à pales 19, qui est située dans la chambre d'évacuation et qui tourne à la même vitesse que la vis transporteuse 15, est capable de projeter les feuilles sur une distance suffisante que pour obtenir un éparpillement adéquat sur le champ. L'efficacité de cette éjection des feuilles est encore augmentée grâce à la force centrifuge plus élevée obtenue par le diamètre sensiblement plus grand de la chambre d'évacuation ainsi que de la roue à pales. Une seule commande est donc nécessaire pour l'évacuation latérale par la vis transporteuse et pour éparpiller les feuilles sur le champ par la tuyère 27. Dans le cas où l'on désire récupérer les feuilles, on modifie l'angle de sortie tangentielle et on adapte une tuyère 28 prolongeant cette sortie pour permettre le chargement des feuilles sur un chariot voisin.

Bien entendu diverses modifications peuvent être apportées par l'homme de l'art au dispositif qui vient d'être décrit uniquement à titre d'exemple non limitatif sans sortir du cadre de l'invention.

REVENDICATIONS

1. Dispositif d'évacuation de feuilles ou tiges de végétaux pour machine agricole comprenant un organe de coupe et une goulotte réceptrice de feuilles ou tiges coupées dans laquelle se meut une vis transporteuse entraînée par un axe, caractérisé en ce que sur un embout (18) de cet axe (16) est fixée une roue à pales (19) aménagée dans une chambre d'évacuation (17) disposée coaxialement par rapport à la vis transporteur (15) et ayant un diamètre sensiblement supérieur à celui de la goulotte (14), l'axe (16) étant supporté par au moins deux paliers : un palier (20) étant situé du côté de l'organe d'entraînement (21) de la vis, l'autre palier (22) étant situé sur la tôle de fermeture latérale (23) de la chambre d'évacuation (17).

2. Dispositif suivant la revendication 1 caractérisé en ce que la chambre d'évacuation (17) possède une sortie (26) qui s'étend sur une section de la périphérie de la chambre (17) permettant l'éjection des feuilles ou tiges coupées selon une trajectoire tangentielle et en ce que cette sortie (26) est orientable axialement par rapport à la goulotte (14) et est prolongée si nécessaire par une tuyère permettant soit le chargement des feuilles ou tiges sur un chariot voisin avec la tuyère (28) en position verticale, soit l'éparpillement sur le sol avec la tuyère (27) en position horizontale.

FIG. 1

FIG. 2

0064488

FIG. 3A

17

10

27

26

FIG. 3B

28

17

26

10

**0064488**

Office europeen
des brevets

RAPPORT DE RECHERCHE EUROPEENNE

Numero de la demande

EP 82 87 0022

## DOCUMENTS CONSIDERES COMME PERTINENTS

| Categorie | Citation du document avec indication en cas de besoin des parties pertinentes | Revendication concernee | CLASSEMENT DE LA DEMANDE (Int Cl. ³) |
|---|---|---|---|
| X | DE - A - 2 910 352 (WIENEKE) <br> * page 4, lignes 1-10; figures 1,2 * | 1 | A 01 D 33/06 |
| A | DE - A - 2 323 285 (KLEINE) <br> * page 5, paragraphe 4 - page 6, paragraphe 1; revendications 1,3,8 * | 1 | |
| A | GB - A - 963 534 (MATHEWS) <br> * page 2, lignes 101-128; figures 3,6 * | 1 | |
| D,A | FR - A - 2 210 087 (MATROT) <br> * page 1, lignes 19-25 * | 1 | DOMAINES TECHNIQUES RECHERCHES (Int Cl ³) <br><br> A 01 D |
| P,X | DE - A - 3 013 544 (DOPPSTADT) <br> * page 7, ligne 9 - page 10, ligne 11; figure 1 * | 1 | |
| A | FR - A - 1 459 184 (REBEROT) | | |
| A | BE - A - 834 978 (DUTRIEUX) | | |

Le present rapport de recherche a ete etabli pour toutes les revendications

| Lieu de la recherche | Date d'achevement de la recherche | Examinateur |
|---|---|---|
| La Haye | 6 juillet 1982 | DE LAMEILLEURE |

CATEGORIE DES DOCUMENTS CITES

X particulierement pertinent a lui seul
Y particulierement pertinent en combinaison avec un autre document de la meme categorie
A arriere-plan technologique
O divulgation non-ecrite
P document intercalaire

T theorie ou principe a la base de l'invention
E document de brevet anterieur mais publie a la date de depot ou apres cette date
D cite dans la demande
L cite pour d'autres raisons

& membre de la meme famille document correspondant